# EUROPEAN PATENT APPLICATION

(11) **EP 2 629 059 A1**
(43) Date of publication of application: **21.08.2013**
(21) Application number: 13168078.7
(22) Date of filing: 16.05.2011
(51) Int. Cl.: G01D 4/00

(54) **Energy monitoring apparatus**

(62) Divisional of application: 11166274.8
(71) Applicant: Wireless Maingate Nordic AB, 371 24 Karlskrona (SE)
(72) Inventor: CARLSSON, Roger, 147 41 Tumba (SE)
(74) Representative: Engdahl, Stefan

(57) **Abstract**

Hence, according to the present invention, an energy monitoring apparatus (100) is provided. The energy monitoring apparatus comprises a detector (111) configured to detect light from a flashing lamp (11) on an energy meter (10) and provide a detector signal based on the detected light. The flashing frequency of the lamp indicates energy consumption metered by the energy meter. The energy monitoring apparatus further comprises a signal adjusting component (112) configured to process the detector signal and output a rescaled signal (based on the processed detector signal), and a controller (121) configured to adaptively control the signal adjusting component such that, responsive to detection of light from the flashing lamp, the rescaled signal pulsates (or oscillates) around a predetermined threshold level. The present invention is advantageous in that it can be used for a wide range of energy meter lamps.

## Description

### Field of the invention

The present invention generally relates to the field of apparatuses and methods for monitoring energy consumption metered by energy meters.

### Background of the invention

Energy meters are used to keep track of energy consumption, e.g. electricity consumption, in spaces, such as buildings and households. In modern energy meters, the energy consumption is normally indicated by the flashing frequency of a flashing lamp, typically a light emitting diode, LED. The flashing lamp can be used to provide information about the energy consumption to a household owner or a power company. Typically, the lamp flashes with 1000 pulses/kWh, but the number of pulses/kWh can vary. By knowing the number of pulses/kWh and measuring the time between the pulses, the live energy consumption of a space can be calculated.

A problem with such energy meters is that the mechanical structure, e.g. the lamp placement and the outer structure of the energy meter, might impede a precise alignment of a light detector of an energy monitoring apparatus, thereby making it difficult to detect the light emitted by the lamp. Further, there is no lamp type standard for energy meters and hence, a wide range of different kinds of lamps are currently used as flashing indicators. The lamps may for instance differ in terms of color and light intensity, and further, a lens or a transparent cover sometimes covers the lamp. Accordingly, there are many factors potentially affecting detection of light from lamps on energy meters.

WO9718483 shows a meter testing circuit for an electronic meter. The meter testing circuit comprises two receiving phototransistors employed to detect a flashing LED indicating the rate of power consumption. One of the phototransistors is covered and is responsive only to noise, ambient conditions and other factors not associated with the presence of the flashing LED. The phototransistors provide signals which are subtracted to eliminate the effect of noise. An amplifier is connected as a comparator which derives its inputs from the phototransistors and controls the uncovered phototransistor such that it does not saturate under ambient light conditions.

Another example of a device for collecting consumption data is shown in FR2831263, which discloses a meter equipped with a measuring diode that generates light pulses. The device further comprises a casing that contains a sensor for counting the light pulses generated by the measuring diode, a microcontroller for generating consumption data from the measured light pulses and a memory for storage of the consumption data.

A drawback with such a meter testing circuit is that photo detectors with an adjustable sensitivity enabling prevention of saturation are technically complex and expensive.

### Summary of the invention

Thus, there is a need for providing alternatives and/or new devices that would overcome, or at least alleviate or mitigate, at least some of the above mentioned drawbacks. It is with respect to the above considerations that the present invention has been made. An object of the present invention is to provide an improved alternative to the above mentioned technique and prior art.

More specifically, it is an object of the present invention to provide an energy monitoring apparatus and a method of monitoring energy consumption with an improved monitoring accuracy and an enhanced ability to suit various types of flashing energy meter lamps.

These and other objects of the present invention are achieved by means of an energy monitoring apparatus and a method of monitoring energy consumption having the features defined in the independent claims. Preferable embodiments of the invention are characterized by the dependent claims.

Hence, according to the present invention, an energy monitoring apparatus is provided. The energy monitoring apparatus comprises a detector configured to detect light from a flashing lamp on an energy meter and provide a detector signal based on the detected light. The flashing frequency of the lamp indicates energy consumption metered by the energy meter. The energy monitoring apparatus further comprises a signal adjusting component configured to process the detector signal and output a rescaled signal (based on the processed detector signal), and a controller configured to adaptively control the signal adjusting component such that, responsive to detection of light from the flashing lamp, the rescaled signal pulsates (or oscillates) around a predetermined threshold level.

Further, according to the present invention, a method of monitoring energy consumption is provided. The method comprises the steps of detecting light emitted by a flashing lamp on an energy meter and providing a detector signal based on the detection. The flashing frequency of the lamp indicates energy consumption metered by the energy meter. Further, the detector signal is processed, whereby a rescaled signal is provided, and the processing of the detector signal is controlled such that the rescaled signal pulsates around a predetermined threshold level.

In the present application, with the term "pulsating around a predetermined threshold" it is meant that the maximum values (e.g. voltage or current values) of the rescaled signal, i.e. the peaks in the rescaled signal representing the lamp in on-mode, exceeds the predetermined threshold level and the minimum values of the rescaled signal representing the lamp in off-mode are below the predetermined threshold level. In other words, the rescaled signal is controlled such that it oscillates around the predetermined threshold level.

Further, the threshold level may be an interval, wherein the signal adjusting component is adaptively controlled such that the rescaled signal pulsates around a predetermined threshold interval, in other words, such that the maximum values of the rescaled signal exceeds the upper limit of the threshold interval and the minimum values are below the lower limit of the threshold interval.

Also according to the present invention, an energy consumption metering system is provided. The energy consumption metering system comprises an energy meter having a flashing lamp and an energy monitoring apparatus according to the first aspect of the present invention. The flashing frequency of the lamp indicates energy consumption metered by the meter.

The present invention is based on the insight that having a fixed gain (or amplification level) for amplifying the detector signal is disadvantageous in that it may provide a rescaled signal too far from the threshold level which is used for further detection and/or processing in the energy monitoring apparatus. In other words, the rescaled signal may be too strong or too faint for further detection, e.g. in a logic circuit. If the detector signal is amplified too much, the pulses (or voltage peaks) in the rescaled signal, which pulses represents the flashing frequency of the lamp, cannot be registered since amplified ambient light makes the signal being detected as constant light detection (or a constant logic one in a logic circuit). Further, if the detector signal is not amplified enough, the pulses in the rescaled signal cannot be registered, since the rescaled signal then is detected as constant non-light detection (or a constant logic zero in a logic circuit) because the voltage peaks representing the flashing light are too faint (or low) to be registered.

The present invention is based in the idea of adaptively processing the detector signal for obtaining a rescaled signal pulsating around a predetermined threshold, whereby the rescaled signal becomes adapted for further processing or detection in the energy monitoring apparatus. Hence, the rescaled signal obtains a proper strength (amplitude, magnitude and/or range) for further monitoring and processing, such as further detection by a logic circuit. Hence, the rescaled signal is processed to pulsate around the predetermined threshold level, less dependent of the strength of the detector signal, and thus, less dependent of the characteristics of the light detected by the detector. With the present invention, the controller is used to control the processing of the detector signal. Accordingly, the energy monitoring apparatus may advantageously self-detect a suitable amplification of the detector signal to approach the predetermined threshold. The adaptive signal processing may be performed continuously when the energy monitoring apparatus operates, or only when the apparatus is set in a certain adaptive mode. Such an adaptive mode may be used e.g. to calibrate the apparatus when it is installed at the energy meter.

The present invention is advantageous in that it can be used for a wide range of energy meter lamps. With the present invention, the energy monitoring is accurate as the rescaled signal can be provided to pulsate around the predetermined threshold level regardless of if the light from the lamp is faint (of low light intensity) and/or of a wavelength which the detector is less sensitive to, or if the light from the lamp is of high intensity and/or of a wavelength which the detector is more sensitive to. Accordingly, a reliable energy monitoring can be performed on a wide range of energy meters with a single energy monitoring product.

Further, the present invention is advantageous in that it can be used for energy meters having different mechanical structures. Hence, the present invention may be used for energy meters having different outer shapes of the housing or cover, as well as energy meters having lenses and transparent covers in front of the lamp. The present invention is also advantageous in that a detector may be used, which is less technically complex and cheaper as compared to prior art techniques wherein detectors having an adjustable sensitivity are required to provide a signal with proper strength (i.e. pulsating around a predetermined threshold). With the present invention, there is no need to adjust the sensitivity of the detector since the detector signal is adjusted instead.

Further, the present invention is advantageous in that a broad spectrum detector for detecting a wide interval of wavelengths of light can be used, whereby the energy monitoring apparatus according to the present invention is applicable for a wide range of energy meters. However, such broad spectrum detectors being currently available are more sensitive to some wavelengths than other. With the present invention, such variations in sensitivity may automatically be compensated by processing the detector signal to a proper level. Hence, the benefit from using a broad spectrum light detector may be utilized and while still providing an accurate energy monitoring.

Moreover, the present invention is advantageous in that a less sensitive detector may be used with a preserved monitoring accuracy since the detector signal is processed to a proper level. Thereby the risks of saturating the detector, and erroneous detection of light derived from ambient light and reflexes (e.g. from lenses) are reduced, which are risks arising with high sensitive detectors.

According to an embodiment of the present invention, the energy monitoring apparatus may further comprise a threshold element configured to output a binary signal by applying the predetermined threshold level to the rescaled signal, which is advantageous in that the binary signal is representative of the flashing frequency of the lamp and can be used for further monitoring or processing.

In an embodiment of the present invention, the controller may be configured to perform the adaptive control on the basis of the rescaled signal or the detector signal, which is advantageous in that the signal may be adjusted in a self-adjusting circuit. The controller may control the signal adjustment component to increase or decrease the gain until the rescaled signal pulsates around the predetermined threshold level. The adjustment may be automatic, thereby reducing the need of manual adjustments of the energy monitoring apparatus. Hence, the energy monitoring apparatus may be automatically adapted to the energy meter which it is applied to.

According to an embodiment of the present invention, the signal adjusting component may comprise an amplifier configured to amplify the detector signal, and the controller may be configured to adjust the gain of the amplifier, which is advantageous in that merely one component is needed for processing the detector signal to a proper level.

According to an alternative embodiment of the present invention, the energy monitoring apparatus may comprise an amplifier (preferably having a fixed gain), wherein the signal adjusting component may comprise an attenuator configured to attenuate the detector signal after being amplified by the amplifier, wherein the controller may be configured to adjust the gain (or loss or attenuation level) of the attenuator.

In an embodiment of the present invention, the detector and an amplifier configured to amplify the detector signal may be arranged in a separate sub unit interconnected via a cable to a main unit of the energy monitoring apparatus, which is advantageous in that the detector signal is amplified before being transmitted to the main unit. If a weak (unamplified) signal is transmitted in the cable, the risk of signal disturbance during the transmission is relatively high. A stronger signal is less sensitive to such disturbance. With the present embodiment, a weak detector signal may be amplified in the sub unit such that sufficient signal strength is provided before it is transmitted in the cable to the main unit. Further, the present embodiment is advantageous in that the sub unit can be easily replaced, for instance if a different detector is required or if the detector breaks.

For example, the amplifier in the sub unit may be the signal adjusting component comprising an adjustable amplifier, wherein the processing of the detector signal for providing the rescaled signal is performed in the sub unit. Alternatively, an amplifier (preferably with a fixed gain) configured to amplify the detector signal, is arranged in the sub unit and the signal adjusting component comprising an adjustable attenuator is arranged in the main unit, wherein the processing of the detector signal for providing the rescaled signal is performed in the main unit, which is advantageous in that feedback from the controller to the signal adjusting component not have to be transmitted in the cable.

According to embodiments of the present invention, the sub unit may be adapted to be mounted on the energy meter and the main unit may be adapted to be located beside the energy meter, which is advantageous in that the sub unit can be made relatively small (including just a few components) and thereby easy to mount (or attach) to the energy meter. Hence, the position of the detector may be more precisely provided in front of the lamp, thereby enhancing light detection. The main unit, which may comprise other (possibly more bulky) components, can be located beside the energy meter. In an embodiment of the present invention, the controller may be arranged in the main unit, contributing to keep the number of components in the sub unit low.

Further, the sub unit may be adapted to be mounted on the energy meter and the cable may be at least 10 cm long allowing the main unit to be located at a distance from the sub unit, which is advantageous in that the cable allows the two units to be placed in any orientation in relation to each other, thereby making the placement of the two unit more flexible. The distance may correspond at most to the length of the cable.

In an embodiment of the present invention, the energy monitoring apparatus may further comprise a communication unit configured to transmit information about the energy consumption to a communication network (such as the Internet or a telecommunication network). The information may be based on the rescaled signal being output from the signal adjusting component. For example, the information may be based on the binary signal output from the threshold element. The present embodiment is advantageous in that information about the energy consumption may be remotely monitored e.g. on a computer or mobile phone by a household owner or a power company.

In an embodiment of the present invention, the energy monitoring apparatus may further comprise a transmitter configured to wirelessly transmit information representative of the energy consumption to a display unit configured to display information about the energy consumption or a communication unit configured to transmit information about the energy consumption to a communication network. The information being transmitted by the transmitter may be based on the rescaled signal being output from the signal adjusting component. For example, the information may be based on the binary signal being output from the threshold element. The present embodiment is advantageous in that the display unit and the communication unit, which both might require relatively high power, can be placed at a location close to a wall socket which not always might be available in proximity to the energy meter, or at a place in the household (or building) suitable for reading off the display. The rest of the energy monitoring apparatus (including the detector, the signal adjusting component, the controller and the transmitter) may be powered by battery and wirelessly send the information representative of the energy consumption to the other unit/units.

According to an embodiment of the present invention, the detector may be configured to detect light within the wavelength range of visible light and preferably also light within the wavelength range of infrared light, which is advantageous in that the energy monitoring apparatus may be applied to a wide variety of energy meters with flashing lamps of various wavelengths.

Further objectives of, features of, and advantages with, the present invention will become apparent when studying the following detailed disclosure, the drawings and the appended claims. Those skilled in the art realize that different features of the present invention can be combined to create embodiments other than those described in the following. In particular, it will be appreciated that the various embodiments described for the energy monitoring apparatus are all combinable with the method as defined in accordance with the second aspect of the present invention.

### Brief description of the drawings

The above, as well as additional objects, features and advantages of the present invention, will be better understood through the following illustrative and non-limiting detailed description of preferred embodiments of the present invention, with reference to the appended drawings, in which:
Figure 1a shows an energy consumption monitoring system according to an embodiment of the present invention;
Figure 1b shows a sub unit of the energy monitoring apparatus and a flashing lamp on an energy meter according to an embodiment of the present invention;
Figure 2 shows a schematic view of an energy monitoring apparatus according to an embodiment of the present invention; and
Figure 3 shows a schematic view of a method of monitoring energy consumption according to an embodiment of the present invention.

All the figures are schematic, not necessarily to scale, and generally only show parts which are necessary in order to elucidate the invention, wherein other parts may be omitted or merely suggested.

### Detailed description of embodiments

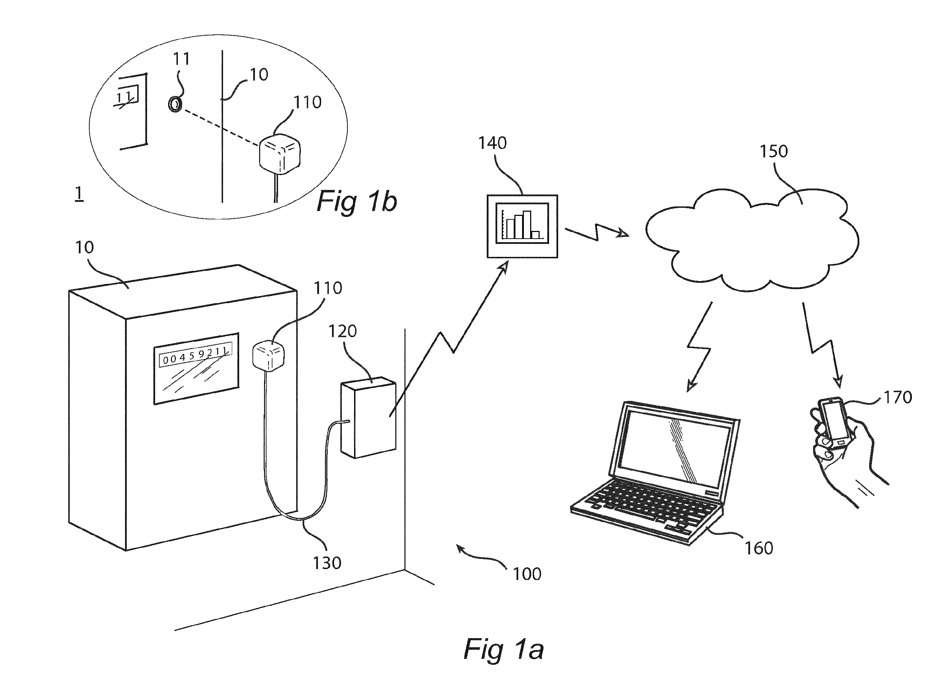

With reference to Figure 1a, there is shown an energy consumption monitoring system 1 in accordance with an embodiment of the present invention. The energy consumption monitoring system 1 comprises an energy meter 10 arranged to meter energy consumption in a space, such as a household or a building. To indicate the energy consumption, the energy meter 10 is provided with a flashing lamp, the flashing frequency of which indicates the energy consumption of the space. The type of flashing lamp provided on energy meters is normally LEDs, but characteristics like the flashing frequency, color, and light intensity may drastically vary among different energy meters.

The energy meter 1 may be an electricity meter, which is the type of energy meter wherein it is most common to use flashing LEDs so indicate energy consumption. However, it will be appreciated that the present invention may be applied to any consumption meter having a flashing lamp indicating consumption, such as gas, oil or water meters.

The energy consumption monitoring system 1 further comprises an energy monitoring apparatus 100 for monitoring the energy consumption indicated by the flashing lamp. The energy monitoring apparatus 100 comprises a sub unit 110 configured to be attached to the energy meter 10 for detecting light emitted by the flashing lamp. Preferably, the sub unit 110 is closely attached to the energy meter 10 to reduce the risk of erroneous detection of ambient light, as shown in Figure 1a. In an illustrating purpose, Figure 1b shows the sub unit 110 positioned at a slight distance from the energy meter 10 for showing the flashing lamp 11 behind the sub unit 110. Referring again to Figure 1a, the energy monitoring apparatus 100 comprises a main unit 120 for processing and (preferably wirelessly) transmitting information about the energy consumption. The main unit 120 is connected to the sub unit 110 via a cable 130, and is preferably placed beside the energy meter 10. For example, the main unit 120 may be arranged on the wall or on a shelf beside the energy meter 10 or even on the energy meter 10 itself. However, the main unit 120 may be arranged as far from the sub unit 110 on the energy meter 10 as the length of the cable allows.

The energy monitoring apparatus 100 further comprises a communication interface 140 configured to (preferably wirelessly) receive the information transmitted by the main unit 120 for displaying it and/or transmitting it to a communication network 50, preferably the Internet or a telecommunication network (e.g. UMTS or GSM). Hence, a household owner may take note of the energy consumption via a computer 160 or a mobile phone 170 connected to the communication network 50. The communication interface 140 may be remotely located anywhere in the household, preferably at a place suitable for reading of the displayed information about the energy consumption.

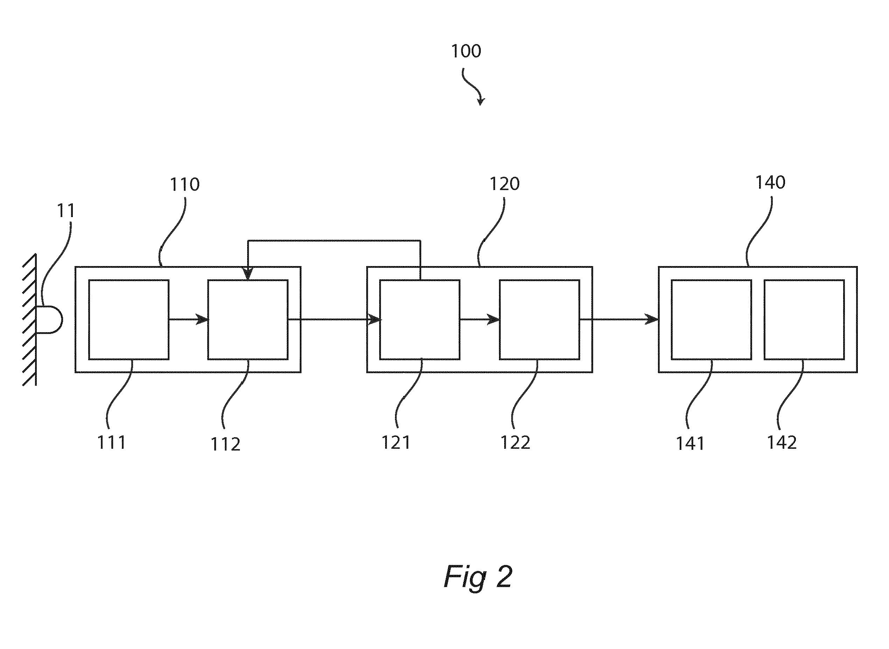

With reference to Figure 2, the energy monitoring apparatus 100 according to an embodiment of the present invention will now be further described. The sub unit 110 of the energy monitoring apparatus 100 comprises a detector 111 configured to detect light from the flashing lamp 11 of the energy meter. The detector 111 may include a photo sensor, such as a photodiode, a photo resistor, a phototransistor or any other type of light detecting component. The detector 111 is configured to transmit a detector signal representative of the light detection.

The sub unit 110 further comprises a signal adjusting component 112 configured to receive the detector signal. The signal adjusting component 112 may include an amplifier having an adjustable gain for adaptively processing (amplifying) the detector signal and thereby providing a rescaled signal.

The main unit 120 of the energy monitoring apparatus 100 comprises a controller 121, such as a micro controller, for controlling the signal adjusting component 112, and preferably a threshold element (not shown) configured to output a binary signal by applying a predetermined threshold level to the rescaled signal, wherein the binary signal represent the flashing frequency of the lamp 11. The threshold element may for instance be an electronic circuit arranged in the controller 121. The main unit 120 further comprises a transmitter 122 for transmitting information (or a signal) representative of the energy consumption. For example, the information may be based on the binary signal. The transmitter 122 may wirelessly transmit the information e.g. via a radio signal.

The communication interface 140 of the energy monitoring apparatus 100 may comprise a display unit 141 for displaying the information transmitted by the transmitter 122, and a communication unit 142 for further transmitting the information from the transmitter to a communication network.

In the following, the operation of the energy monitoring apparatus 100 will be described.

The lamp 11 flashes with a frequency representing the energy consumption metered by the energy meter. The light signal from the lamp 11 is in principal a digital signal, i.e., it is either on or off (apart from a slight gradual increase and decrease in the light intensity in the switching moment between on and off). The flashing light from the lamp 11 is detected by the detector 111 which transmits a detector signal representative of the light detection to the signal adjusting component 112. The detector signal pulsates in response to the flashing light and has voltage peaks representing the on-state of the lamp 11 and voltage dips representing the off-state of the lamp 11.

The signal adjusting component 112 receives the detector signal and the adjustable amplifier amplifies (i.e. processes) it and provides a rescaled signal (i.e. the processed detector signal) and transmits the rescaled signal to the controller 121. The controller 121 receives the rescaled signal from the signal adjusting component 112 and determines if the rescaled signal has a proper strength, which e.g. can be made in a digital manner by using the threshold element. The controller 121 may for instance determine if the voltage peaks of the rescaled signal exceeds the predetermined threshold level, thereby being represented as a logic one in the binary signal being output from the threshold element, if not, the controller 121 controls the signal adjusting component 112 via a feedback signal to increase the gain. Further, the controller 121 may determine if the voltage dips exceeds the predetermined threshold level (thereby being represented as a logic one in the binary signal, which is undesirable) and in that case decrease the gain until the voltage dips are below the predetermined threshold level and thereby being represented as a logic zero in the binary signal output from the threshold element. In this manner, the controller 121 controls the signal adjusting component 112 to amplify the detector signal such that the rescaled signal pulsates around the predetermined threshold level, wherein the voltage peaks are detected as logic ones and the voltage dips are detected as logic zeros in the binary signal.

Alternatively, the controller 121 may receive the detector signal and base the adaptive control of the signal adjusting component 111 on the detector signal instead of the rescaled signal (this alternative is not shown).

The binary signal (based on the rescaled signal), now representing the flashing frequency of the lamp 11, and thereby the energy consumption, is then transmitted (directly or indirectly via other components) to the transmitter 122 which further transmits the information (or signal) representing the energy consumption to the communication interface 140 which displays and/or further transmits the information to a communication network.

In an alternative arrangement (not shown), the energy monitoring apparatus 100 may include an amplifier with a fixed gain arranged in the sub unit 110, and an attenuator with an adjustable gain, preferably arranged in the main unit 120, thereby reducing the need of sending feedback signals from the controller 121 in the main unit 120 via the cable to the sub unit 110. The controller 121 may then be configured to adjust the gain of the attenuator in a corresponding way as described above with reference to the adjustable amplifier.

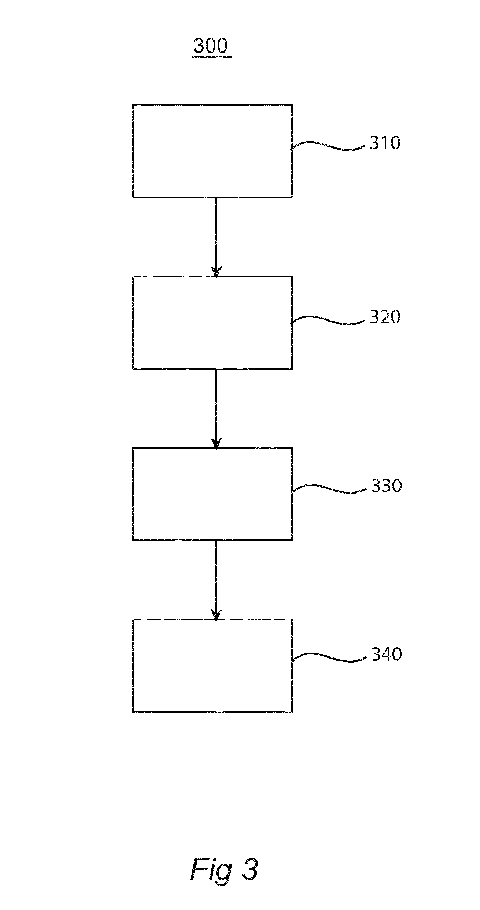

Turning now to Figure 3, a method 300 of monitoring energy consumption according to an embodiment of the present invention will be described.

The method 300 comprises the steps of detecting 310 light emitted by a flashing lamp on an energy meter and providing 320 a detector signal based on the detection. The flashing frequency of the lamp indicates energy consumption metered by the energy meter. Further, the detector signal is processed 330, whereby a rescaled signal is provided, and the processing 330 of the detector signal is controlled 340 such that the rescaled signal pulsates around a predetermined threshold level.

While specific embodiments have been described, the skilled person will understand that various modifications and alterations are conceivable within the scope as defined in the appended claims.

For example, it will be appreciated that the sub unit and the main unit may be arranged in the same unit (or box) adapted to be mounted on the energy meter.

Further, the energy monitoring system may comprise a plurality of energy meters, each one associated with a household (or any other kind of space) e.g. in an apartment building. The energy monitoring system may then further comprise one sub unit for each energy meter and a common main unit for transmitting information about the energy consumption of each energy meter to communication units associated with each household. Hence, only one transmitter is needed to provide information about the energy consumption of a plurality of households.

## Claims

1. An energy monitoring apparatus (100) comprising:
a detector (111) configured to detect light from a flashing lamp (11) on an energy meter (10), wherein the flashing frequency of the lamp indicates energy consumption metered by the energy meter, and provide a detector signal based on the detected light,
**characterised in that** the energy monitoring apparatus further comprises:
a signal adjusting component (112) configured to process the detector signal and output a rescaled signal;
a controller (121) configured to adaptively control the signal adjusting component such that, responsive to detection of light from the flashing lamp, the rescaled signal pulsates around a predetermined threshold level; and
a transmitter (122) configured to wirelessly transmit information representative of the energy consumption to a display unit (141) configured to display information about the energy consumption, and/or to a communication unit (142) configured to transmit information about the energy consumption to a communication network (150), the information transmitted by the transmitter being based on the rescaled signal.

2. An energy monitoring apparatus as defined in claim 1, further comprising a threshold element configured to output a binary signal by applying the predetermined threshold level to the rescaled signal.

3. An energy monitoring apparatus as defined in claim 1 or 2, wherein the controller is configured to perform said adaptive control on the basis of one or more in the group comprising:
the rescaled signal, and
the detector signal.

4. An energy monitoring apparatus as defined in any one of the preceding claims, wherein the signal adjusting component comprises an amplifier configured to amplify the signal from the detector and the controller is configured to adjust the gain of the amplifier.

5. An energy monitoring apparatus as defined in any one of the preceding claims, further comprising an amplifier, wherein the signal adjusting component comprises an attenuator configured to attenuate the detector signal after being amplified by the amplifier, wherein the controller is configured to adjust the gain of the attenuator.

6. An energy monitoring apparatus as defined in any one of the preceding claims, wherein the detector and an amplifier configured to amplify the detector signal are arranged in a separate sub unit (110) interconnected via a cable (130) to a main unit (120) of the energy monitoring apparatus.

7. An energy monitoring apparatus as defined in claim 6, wherein the sub unit is adapted to be mounted on the energy meter and the main unit is adapted to be located beside the energy meter.

8. An energy monitoring apparatus as defined in claim 6 or 7, wherein the sub unit is adapted to be mounted on the energy meter and the cable is at least 10 cm long allowing the main unit to be located at a distance from the sub unit, said distance corresponding at most to the length of the cable.

9. An energy monitoring apparatus as defined in any one of the claims 6-8, wherein the controller is arranged in the main unit.

10. An energy monitoring apparatus as defined in any one of the preceding claims, wherein the detector is configured to detect light within the wavelength range of visible light and preferably also light within the wavelength range of infrared light.

11. An energy consumption metering system (1) comprising:
an energy meter having a flashing lamp, wherein the flashing frequency of the lamp indicates energy consumption metered by the meter; and
an energy monitoring apparatus according to claim 1.

12. A method (300) of monitoring energy consumption, the method being **characterized in that** it comprises the steps of:
detecting (310) light emitted by a flashing lamp on an energy meter, wherein the flashing frequency of the lamp indicates energy consumption metered by the energy meter;
providing (320) a detector signal based on said detection;
processing (330) the detector signal and thereby providing a rescaled signal;
controlling (340) the processing of the detector signal such that, responsive to detection of light from the flashing lamp, the rescaled signal pulsates around a predetermined threshold level; and,
by means of a transmitter, wirelessly transmit information representative of the energy consumption to a display unit configured to display information about the energy consumption and/or to a communication unit configured to transmit information about the energy consumption to a communication network, the information transmitted by the transmitter being based on the rescaled signal.
